# EUROPÄISCHE PATENTSCHRIFT

(11) **EP 3 805 019 B1**
(45) Veröffentlichungstag und Bekanntmachung des Hinweises auf die Patenterteilung: **09.11.2022**
(21) Anmeldenummer: 20197116.5
(22) Anmeldetag: 21.09.2020
(51) Int. Cl.: B60C 11/12

(54) **FAHRZEUGLUFTREIFEN**
PNEUMATIC TYRE
PNEUMATIQUE DE VÉHICULE

(30) Priorität: 10.10.2019 DE 102019215505
(43) Veröffentlichungstag der Anmeldung: 14.04.2021
(73) Patentinhaber: Continental Reifen Deutschland GmbH, 30165 Hannover (DE)
(72) Erfinder: Brockmann, Jürgen, 30419 Hannover (DE); Heinhaupt, Torsten, 30419 Hannover (DE)
(74) Vertreter: Continental Corporation

(56) Entgegenhaltungen:
- EP-A1- 2 133 217
- EP-A1- 3 354 485
- EP-A2- 1 795 372
- EP-B1- 2 133 217
- CN-A- 108 340 740
- US-A- 4 598 747

## Beschreibung

Die Erfindung betrifft einen Fahrzeugluftreifen mit einem Laufstreifen mit Profilelementen, wie beispielsweise Profilblöcken, welche mit in Draufsicht parallel zueinander sowie zur axialen Richtung unter einem Winkel von 0° bis 50° verlaufenden Einschnitten versehen sind, wobei jeder Einschnitt in Draufsicht zumindest über einen Abschnitt in Form einer harmonischen Welle verläuft und sich jeder Einschnitt unter fortlaufender Verringerung der Amplitude der harmonischen Wellenform von der Außenfläche des Profilelementes radial nach innen erstreckt.

Ein derartiger gattungsbildender Fahrzeugluftreifen ist beispielsweise aus der US 4 598 747 A bekannt. Der Laufstreifen dieses Reifens weist Profilblöcke mit parallel zueinander und in Draufsicht harmonisch wellenförmig verlaufenden Einschnitten auf. Gemäß einer Variante nimmt die Amplitude der Wellenform der Einschnitte von der Außenfläche des jeweiligen Profilblockes radial nach innen auf lineare, also gleichmäßige, Weise ab. Bevorzugter Weise ist die Amplitude der Wellenform der Einschnitte in einem radial äußeren Einschnittbereich konstant und nimmt nur in einem radial inneren Einschnittbereich ab. Ferner ist auch aus der EP 3 277 523 B1 ein Fahrzeugluftreifen der eingangs genannten Art bekannt. Die in den Profilelementen des Laufstreifens ausgebildeten Einschnitte mit wellenförmig verlaufendem Abschnitt sind in axialer Richtung orientiert. Die Wellenlänge der Wellenform der Einschnitte vergrößert sich ausgehend von der Außenfläche des Profilelements bis zum Einschnittgrund um 5% bis 30%. Dadurch sollen die Winterperformance des Reifens, insbesondere der Schneegriff, und die Handlingeigenschaften mit fortschreitendem Laufstreifenabrieb erhalten bleiben. Gemäß einer bevorzugten Ausführung nimmt zusätzlich die Amplitude der Wellenform des Einschnittes bis zum Einschnittgrund um 30% bis 70% ab, wodurch Vorteile im Hinblick auf die Steifigkeit der Profilblöcke erzielt werden.

Ein weiterer Fahrzeugluftreifen der eingangs genannten Art ist aus der DE 10 2016 224 370 A1 bekannt. Der Laufstreifen dieses Reifen weist mittlere Profilblöcke mit Einschnitten auf, welche gemäß bevorzugten Ausführungen wellenförmig verlaufen, wobei sich die Amplitude und/oder die Wellenlänge ausgehend von der Außenfläche der Profilblöcke radial nach innen verringern.

Weitere Fahrzeugluftreifen mit Profilblöcken, die Einschnitte mit einer Wellenform aufweisen sind aus den Dokumenten EP3354485A1, EP1795372A2, EP2133217A1 und CN108340740A bekannt.

In Profilelementen von Laufstreifen ausgebildete Einschnitte reduzieren bekannter Weise die Quersteifigkeit der Profilelemente, wobei wellenförmig verlaufende Einschnitte, bedingt durch die unter Querbelastung auftretende gegenseitige Abstützung bzw. Verzahnung der durch die Einschnitte gebildeten Profilsegmente, die Quersteifigkeit in geringerem Ausmaß verringern als gerade verlaufende Einschnitte.

Der Erfindung liegt die Aufgabe zugrunde, einen Fahrzeugluftreifen eingangs genannter Art derart zu gestalten, dass sich bei fortschreitendem Abrieb des Laufstreifens eine für gute Handlingeigenschaften optimale Steifigkeit der Profilelemente einstellt.

Gelöst wird die gestellte Aufgabe erfindungsgemäß dadurch, dass die Amplitude der harmonischen Wellenform des Einschnittes von der Außenfläche des Profilelementes radial nach innen auf progressive Weise abnimmt.

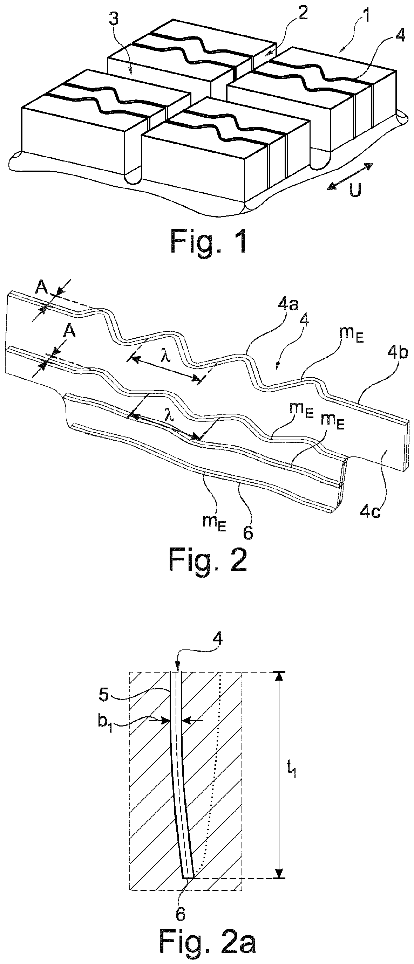

Die erfindungsgemäß ausgeführten Einschnitte zeigen mit zunehmendem Laufstreifenabrieb ein sich speziell veränderndes Verschränkungsverhalten unter Querbelastung des Profils. Entsprechend der progressiven Abnahme nimmt die Amplitude der Wellenform ausgehend von der Außenfläche des Profilelementes zunächst nur wenig und mit zunehmender Tiefe auf eine sich kontinuierlich beschleunigende Weise ab (vergleiche Fig. 2a). Ausgehend von einem neuen Reifen bleibt daher nach anfänglichem Laufstreifenabrieb, bedingt durch die zunächst kaum abnehmende Amplitude, ein recht ausgeprägtes Verschränkungsverhalten der Einschnitte erhalten. Mit deutlich fortschreitendem Laufstreifenabrieb nehmen die Verschränkungseffekte der Einschnitte dann überproportional ab (beispielsweise bezogen auf jeden weiteren Millimeter Laufstreifenabrieb). Da bei fortschreitendem Laufstreifenabrieb gleichzeitig die Profilelemente überproportional steifer werden, werden die dabei abnehmenden Verschränkungseffekte kompensiert. Es bleibt daher fortlaufend eine optimale Steifigkeit der Profilelemente erhalten. Mit der sich mit fortschreitendem Laufstreifenabrieb verringernden Amplitude geht auch eine Abnahme der Länge der wellenförmig verlaufenden Einschnittabschnitte einher (siehe Fig. 2), wodurch sich vorteilhafter Weise die Nettokontaktfläche der Profilelemente vergrößert.

Gemäß einer bevorzugten Ausführung nimmt die Amplitude der harmonischen Wellenform des Einschnittes bis in eine Tiefe von zumindest 65%, insbesondere von zumindest 80%, der Tiefe des Einschnittes auf progressive Weise ab. Die vorteilhaften Effekte der Einschnitte blieben daher über die Lebensdauer des Reifens erhalten.

Ferner ist es vorteilhaft, wenn die Amplitude der harmonischen Wellenform des Einschnittes über die gesamte Tiefenerstreckung des Einschnittes abnimmt, sodass die Amplitude an der Laufstreifenperipherie ihren Maximalwert und am Einschnittgrund des Einschnittes ihren Minimalwert aufweist. Diese Maßnahme trägt zur Beibehaltung einer optimalen Steifigkeit mit fortschreitendem Laufstreifenabrieb bei.

Weitere bevorzugte Ausführungen betreffen einen besonders vorteilhaften Verlauf der progressiven Abnahme der Amplitude.

So ist es bevorzugt, wenn der Minimalwert der Amplitude 20% bis 40%, insbesondere 23% bis 33%, des Maximalwertes der Amplitude beträgt. Dieses Merkmal kennzeichnet das bevorzugte Ausmaß der progressiven Abnahme der Amplitude und ist für eine optimale Steifigkeit der Profilelemente mit fortschreitendem Laufstreifenabrieb von Vorteil.

In diesem Zusammenhang ist es ferner bevorzugt, wenn die Amplitude der harmonischen Wellenform des Einschnittes in einer Tiefe von 50% der Tiefe des Einschnittes um 20% bis 30%, insbesondere um 22% bis 26%, größer ist als der aus dem Minimalwert und dem Maximalwert errechnete arithmetische Mittelwert der Amplitude, sowie wenn die Amplitude der harmonischen Wellenform des Einschnittes in einer Tiefe von 75% der Tiefe des Einschnittes um 15% bis 25%, insbesondere um 18% bis 22%, größer ist als jener Mittelwert der Amplitude, welcher aus der Amplitude in einer Tiefe von 50% der Tiefe des Einschnittes und dem Minimalwert der Amplitude errechnet ist.

Bei dieser Ausführung ist es dabei bevorzugt, dass die Wellenlänge der harmonischen Wellenform des Einschnittes über die radiale Erstreckung der Wellenform konstant bleibt.

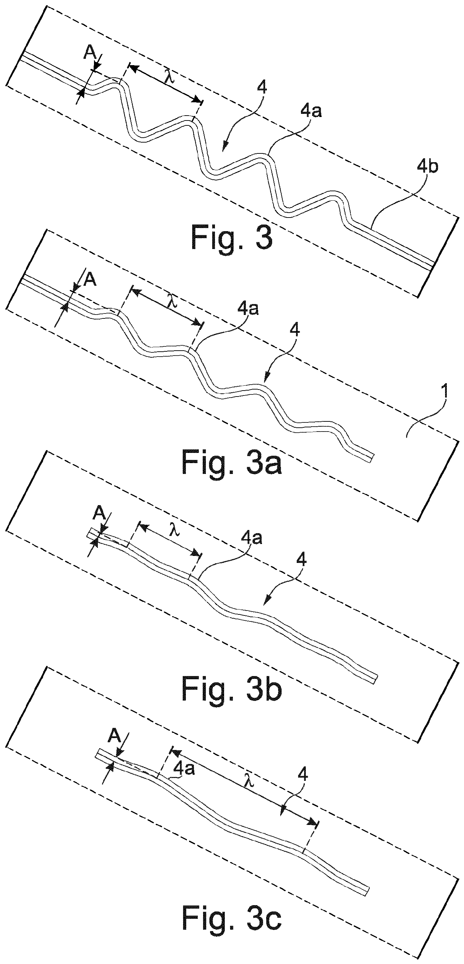

Bei einer weiteren bevorzugten Ausführung verändert sich auch die Wellenlänge der Wellenform des Einschnittes in radialer Richtung auf spezielle Weise, wobei es insbesondere bevorzugt ist, wenn die Wellenlänge der harmonischen Wellenform des Einschnittes radial nach innen stetig zunimmt. Auch die Wellenlänge nimmt einen Einfluss auf die Verschränkungseffekte der Einschnitte und auf die Nettokontaktfläche der Profilelemente. Die Zunahme der Wellenlänge wirkt dabei ähnlich wie die Abnahme der Amplitude. Mit fortschreitendem Laufstreifenabrieb nehmen die Verschränkungseffekte ab, da weniger oder weniger ausgeprägte "Wellenberge" und "Wellentäler" unter Belastung ineinandergreifen. Die Abnahme der Verschränkungseffekte wird durch die zunehmende Steifigkeit der sich abreibenden Profilelemente kompensiert. Gleichzeitig nimmt die Länge des wellenförmig verlaufenden Einschnittabschnittes ab (vergleiche Fig. 3a bis Fig. 3c), sodass der Einschnitt mit fortschreitendem Abrieb zunehmend "gerader" verläuft, wodurch eine zusätzliche Vergrößerung der Nettokontaktfläche der Profilelemente erzielt wird.

Bei dieser Ausführung ist es besonders vorteilhaft, wenn die Wellenlänge der harmonischen Wellenform des Einschnittes über die gesamte Tiefenerstreckung des Einschnittes zunimmt. Dadurch sind die vorteilhaften Effekte über die gesamte Lebensdauer des Reifens vorhanden.

Eine weitere Ausgestaltung des Einschnittes bei dieser bevorzugten Ausführung ist dadurch gekennzeichnet, dass, jeweils ermittelt an der tiefsten Stelle des Einschnittes, die Wellenlänge der harmonischen Wellenform des Einschnittes das 30,0- bis 40,0-Fache, insbesondere das 33,0- bis 37,0-Fache, der Amplitude der harmonischen Wellenform beträgt.

Bei Ausführungen mit in radialer Richtung und nach innen zunehmender Wellenlänge ist es von Vorteil, wenn die Amplitude in einer Tiefe von 40% der Tiefe des Einschnittes um 7% bis 17%, insbesondere um 9% bis 14%, größer als die Summe aus dem 0,6-Fachen des Maximalwertes der Amplitude und dem 0,4-Fachen des Minimalwertes der Amplitude.

Bei sämtlichen Ausführungen ist es bevorzugt, wenn, jeweils ermittelt an der Laufstreifenperipherie, die Wellenlänge der harmonischen Wellenform des Einschnittes das 4,0- bis 5,0-Fache, insbesondere das 4,2- bis 4,6-Fache, der Amplitude der harmonischen Wellenform beträgt.

Die Wellenform der Einschnitte kann auf verschiedene Weise gestaltet sein. Insbesondere liegt der harmonischen Wellenform des Einschnittes eine Sinus-Welle, eine Cosinus-Welle, eine Reckteck-Welle, eine Dreieck-Welle, eine Sägezahn-Welle oder eine Trapez-Welle zugrunde.

Weitere Merkmale, Vorteile und Einzelheiten der Erfindung werden nun anhand der Zeichnung, die schematisch Ausführungsbeispiele der Erfindung zeigt, näher beschrieben. Dabei zeigen
Fig. 1 eine Ansicht einiger Profilblöcke eines Laufstreifens eines Fahrzeugluftreifens,
Fig. 2 eine Visualisierung eines Einschnittes gemäß einer ersten Ausführungsvariante der Erfindung,
Fig. 2a einen Querschnitt durch einen in einem Profilblock ausgebildeten und gemäß Fig. 2 gestalteten Einschnitt,
Fig. 3 eine vergrößerte Draufsicht auf einen in einem Profilblock ausgebildeten Einschnitt gemäß einer zweiten Ausführungsvariante der Erfindung,
Fig. 3a bis Fig. 3c je eine Draufsicht auf den Einschnitt aus Fig. 3 in unterschiedlichen Abriebzuständen des Profilblockes und
Fig. 4a bis Fig. 4c schematische Draufsichten auf Einschnitte mit unterschiedlichen Verläufen.

Gemäß der Erfindung ausgeführte Fahrzeugluftreifen sind insbesondere Reifen in Radialbauart für Personenkraftwagen, Vans oder Light-Trucks, wobei die Fahrzeugluftreifen zum Fahren unter winterlichen Fahrbedingungen besonders gut geeignet sind.

Fig. 1 zeigt vier Profilblöcke 1, welche zu zwei im mittleren Laufstreifenbereich nebeneinander verlaufenden Profilblockreihen gehören, die durch eine beim gezeigten Ausführungsbeispiel gerade verlaufende Umfangsrille 2 voneinander getrennt sind, wobei weitere nicht bezeichnete Umfangsrillen die Profilblockreihen außen begrenzen. Der Doppelpfeil U kennzeichnet die Umfangrichtung des Reifens.

Die Umfangsrille 2 weist die für den jeweiligen Fahrzeugluftreifen vorgesehene Profiltiefe auf, welche insbesondere 6,5 mm bis 10,0 mm beträgt. Innerhalb der Profilblockreihen sind in Umfangsrichtung benachbarte Profilblöcke 1 jeweils durch eine Querrille 3 voneinander getrennt, welche beim gezeigten Ausführungsbeispiel eine mit der Umfangsrille 2 übereinstimmende Tiefe aufweist.

Jeder Profilblock 1 ist beim gezeigten Ausführungsbeispiel mit zwei übereinstimmend ausgeführten Einschnitten 4 versehen, welche innerhalb jedes Profilblockes 1 gleichmäßig verteilt angeordnet sind, sich parallel zueinander und in Querrichtung erstrecken und den jeweiligen Profilblock 1 durchqueren. Bevorzugte Ausgestaltungen der Einschnitte 4 werden nachfolgend anhand der Fig. 2 und 2a, welche eine erste Variante des Einschnittes 4 zeigen, und anhand von Fig. 3 und Fig. 3a bis Fig. 3c, welche eine zweite Variante des Einschnittes 4 zeigen, näher erläutert.

Wie der Querschnitt in Fig. 2a zeigt, ist der Einschnitt 4 durch zwei korrespondierende Einschnittwände 5 und einen Einschnittgrund 6 begrenzt. Der Einschnitt 4 weist eine konstante Breite b₁ von 0,4 mm bis 1,2 mm, insbesondere von bis zu 0,8 mm, sowie in radialer Richtung an seiner tiefsten Stelle bzw. in seinem tiefsten Bereich eine maximale Tiefe t₁ von 70% bis 100%, insbesondere von höchstens 95%, der Profiltiefe auf.

Wie die Visualisierung eines Einschnittes 4 in Fig. 2 zeigt, setzt sich der Einschnitt 4 gemäß der ersten Variante aus einem in Draufsicht harmonisch wellenförmig verlaufenden Hauptabschnitt 4a und zwei in Draufsicht gerade verlaufenden Endabschnitten 4b zusammen, wobei sich der Hauptabschnitt 4a bei neuem Reifen insbesondere über zumindest 50% der Erstreckungslänge des Einschnittes 4 erstreckt. Beim gezeigten Ausführungsbeispiel liegt der Wellenform des Hauptabschnittes 4a eine sinusförmige Welle zugrunde, wobei der Hauptabschnitt 4a beim gezeigten Ausführungsbeispiel über mehrere Wellenlängen verläuft. Alternativ kann der Hauptabschnitt 4a auch nur über eine einzige Wellenlänge verlaufen. Die Wellenform des Hauptabschnittes 4a setzt sich, wie nachfolgend noch genauer beschrieben wird, in radialer Richtung bis zum Einschnittgrund 6 fort. Ferner weist der Einschnitt 4 in an sich bekannter Weise ausgeführte, asymmetrisch angehobene Randabschnitte 4c auf.

In Fig. 2 sind in unterschiedlichen Positionen (Laufstreifenperipherie, Tiefe von 50% der Tiefe t₁, Tiefe von 75% der Tiefe t₁ und Tiefe t₁) des Einschnittes 4 jeweils mehrere den lokal vorliegenden Einschnittverlauf kennzeichnende Linien eingezeichnet, wobei die abschnittsweise wellenförmige Mittellinie m_{E} des Einschnittes 4 ebenfalls jeweils eingezeichnet ist. Die nachfolgenden, die Wellenform des Hauptabschnittes 4a betreffenden Ausführungen beziehen sich jeweils auf die Mittlinie m_{E} des Einschnittes 4. Der Wellenform des Hauptabschnittes 4a liegt eine Wellenlänge λ und eine Amplitude A zugrunde. Die Wellenlänge λ der Wellenform ist über die gesamte Tiefenerstreckung des Hauptabschnittes 4a konstant. Die Amplitude A der Wellenform verringert sich ausgehend von der Laufstreifenperipherie in Richtung zum und bis zum Einschnittgrund 6 stetig, also nicht sprunghaft, wobei die Abnahme der Amplitude A auf progressive (beschleunigte) Weise erfolgt (Fig. 2a). Wie Fig. 2 in Kombination mit Fig. 2a zeigt, nimmt die Amplitude A entsprechend der progressiven Abnahme ausgehend von der Laufstreifenperipherie zunächst nur geringfügig und mit zunehmender Tiefe auf eine beschleunigte, also verstärkte, Weise ab, wodurch der Einschnitt 4, im Querschnitt betrachtet, durchgehend gekrümmt ist (Fig. 2a). Die Amplitude A weist daher an der Laufstreifenperipherie ihren Maximalwert und am Einschnittgrund 6 ihren Minimalwert auf, wobei der Minimalwert der Amplitude 20% bis 40%, insbesondere 23% bis 33%, des Maximalwertes der Amplitude beträgt. Aus dem Maximalwert und dem Minimalwert der Amplitude ergibt sich ein arithmetischer Mittelwert der Amplitude (Summe aus Maximalwert und Minimalwert, geteilt durch zwei). Die in einer Tiefe von 50% der Tiefe t₁ des Einschnittes 4 ermittelte Amplitude ist um 20% bis 30%, insbesondere um 22% bis 26%, größer als der arithmetische Mittelwert der Amplitude. In einer Tiefe von 75% der Tiefe t₁ des Einschnittes 4 (gemessen von der Laufstreifenperipherie) ist die Amplitude 15% bis 25%, insbesondere 18% bis 22%, größer als jener Mittelwert der Amplitude, welcher aus der Amplitude in einer Tiefe von 50% der Tiefe t₁ und der Amplitude in der Tiefe t₁ (Minimalwert der Amplitude) errechnet ist.

Bei der ersten Variante des Einschnittes 4 ist es bevorzugt, wenn an der Laufstreifenperipherie die Größe der Wellenlänge λ das 4,0- bis 5,0-Fache, insbesondere das 4,2- bis 4,6-Fache, der Größe der Amplitude A beträgt.

Wie Fig. 3 zeigt, setzt sich der Einschnitt 4 gemäß der zweiten Variante aus einen harmonisch wellenförmig verlaufenden Hauptabschnitt 4a und zwei gerade verlaufende Endabschnitten 4b zusammen, wobei der Hauptabschnitt 4a beim Ausführungsbeispiel über etwas mehr als drei Wellenlägen verläuft und als Sinus-Welle ausgeführt ist. Fig. 3a bis Fig. 3c zeigen je eine Draufsicht auf den Einschnitt 4, wobei der zugehörige Profilblock 1 in Fig. 3a auf 50% der Tiefe t₁ des Einschnittes 4, in Fig. 3b auf 75% der Tiefe t₁ des Einschnittes 4 und in Fig. 3c auf das Niveau des Einschnittgrundes 6 abgerieben ist.

Der Wellenform des Hauptabschnittes 4a liegt eine Wellenlänge λ und eine Amplitude A zugrunde, wobei die Amplitude A ausgehend von der Laufstreifenperipherie in Richtung zum Einschnittgrund 6 stetig abnimmt (Fig. 3a bis Fig. 3c) und wobei die Wellenlänge λ von der Laufstreifenperipherie in Richtung zum Einschnittgrund 6 stetig zunimmt. Die Amplitude A nimmt dabei ausgehend von der Außenfläche des Profilelementes radial nach innen auf progressive Weise ab. Wie bei der ersten Variante des Einschnittes 4 beträgt auch bei der zweiten Variante des Einschnittes 4 der Minimalwert der Amplitude A 20% bis 40%, insbesondere 23% bis 33%, des Maximalwertes der Amplitude A. Ferner ist die Amplitude A in einer Tiefe von 40% der Tiefe t₁ (gemessen von der Laufstreifenperipherie), um 7% bis 17%, insbesondere um 9% bis 14%, größer als die Summe aus dem 0,6-Fachen des Maximalwertes der Amplitude A und dem 0,4-Fachen des Minimalwertes der Amplitude A.

Bei der zweiten Variante des Einschnittes 4 ist es bevorzugt, wenn, übereinstimmend zur ersten Variante des Einschnittes 4, an der Laufstreifenperipherie die Größe der Wellenlänge λ das 4,0- bis 5,0-Fache, insbesondere das 4,2- bis 4,6-Fache, der Größe der Amplitude A beträgt.

Ferner ist es bei der zweiten Variante bevorzugt, wenn jeweils ermittelt an der tiefsten Stelle des Einschnittes 4, die Wellenlänge λ das 30,0- bis 40,0-Fache, insbesondere das 33,0- bis 37,0-Fache, der Amplitude A beträgt.

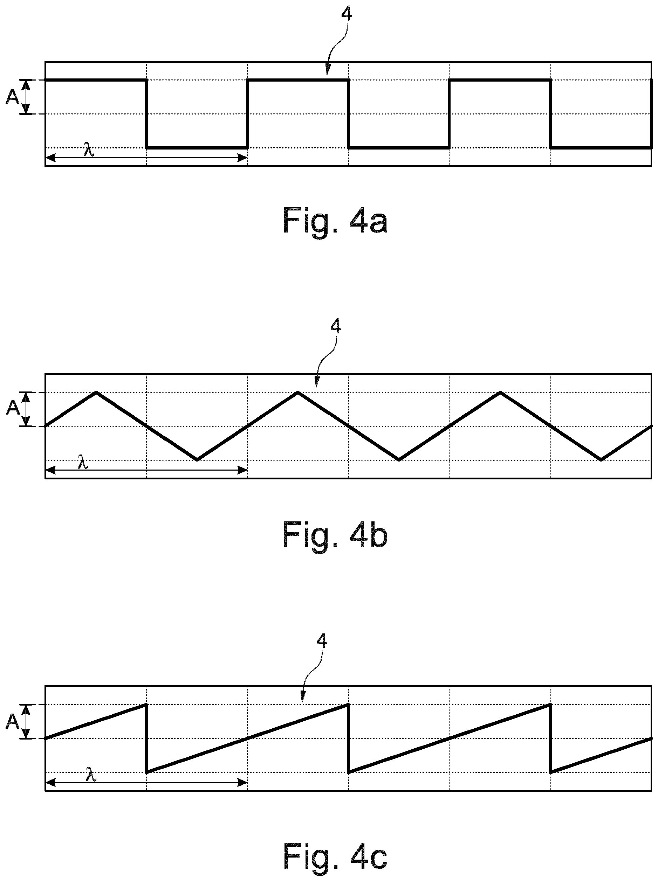

Fig. 4a bis Fig. 4c zeigen schematische Draufsichten auf Einschnitte 4 mit alternativen Wellenformen. Dem Einschnitt 4 in Fig. 4a liegt eine Reckteck-Welle, in Fig. 4b eine Dreieck-Welle und Fig. 4c eine Sägezahn-Welle zugrunde. Die Wellenlänge λ und die Amplitude A sind jeweils eingezeichnet. Insbesondere kann der Wellenform auch eine Trapez-Welle oder eine Cosinus-Welle zugrunde liegen. Eine als Cosinus-Welle ausgeführte Wellenform unterscheidet sich von einer als Sinus-Welle ausgeführte Wellenformen in bekannter Weise lediglich durch die relative Lage ihrer Wellenenden gegenüber der sonstigen Wellenform.

Die Erfindung ist auf die beschriebenen Ausführungsbeispiele nicht beschränkt. Der Schutzumfang der Erfindung ist durch die angefügten Ansprüche definiert.

Die Einschnitte können auch frei von randseitige Einschnittabschnitten sein und/oder über ihre gesamte Erstreckung in Draufsicht wellenförmig verlaufen, sodass sich die Amplitude und gegebenenfalls die Wellenlänge über die gesamte Erstreckung des jeweiligen Einschnitts ändert. Die Einschnitte können sich unter einem von der axialen Richtung um bis zu 50° abweichenden Winkel erstrecken sowie in beliebigen Profilelementen eines Laufstreifens, etwa Profilbändern, ausgebildet sein.

Die Amplitude der harmonischen Wellenform der Einschnitte nimmt vorzugsweise bis in eine Tiefe von zumindest 65%, insbesondere von zumindest 80%, der maximalen Tiefe des jeweiligen Einschnittes auf progressive Weise ab.

### Bezugszeichenliste

- 1: Profilblock
- 2: Umfangsrille
- 3: Querrille
- 4: Einschnitt
- 4a: Hauptabschnitt
- 4b: Endabschnitt
- 4c: Randabschnitte
- 5: Einschnittwand
- 6: Einschnittgrund
- A: Amplitude
- b₁: Breite
- m_{E}: Mittellinie
- t₁: Tiefe
- U: Doppelpfeil (Umfangsrichtung)
- λ: Wellenlänge

## Patentansprüche

1. Fahrzeugluftreifen mit einem Laufstreifen mit Profilelementen (1), wie beispielsweise Profilblöcken (1), welche mit sich in Draufsicht parallel zueinander sowie zur axialen Richtung unter einem Winkel von 0° bis 50° erstreckenden Einschnitten (4) versehen sind, wobei jeder Einschnitt (4) in Draufsicht zumindest über einen Abschnitt (4a) in Form einer harmonischen Welle verläuft und sich jeder Einschnitt (4) unter fortlaufender Verringerung der Amplitude (A) der harmonischen Wellenform von der Außenfläche des Profilelementes (1) radial nach innen erstreckt,
**dadurch gekennzeichnet,**
**dass** die Amplitude (A) der harmonischen Wellenform des Einschnittes (4) von der Außenfläche des Profilelementes (1) radial nach innen auf progressive Weise abnimmt.

2. Fahrzeugluftreifen nach Anspruch 1, **dadurch gekennzeichnet, dass** die Amplitude (A) der harmonischen Wellenform des Einschnittes (4) bis in eine Tiefe von zumindest 65%, insbesondere von zumindest 80%, der Tiefe (t₁) des Einschnittes (4) auf progressive Weise abnimmt.

3. Fahrzeugluftreifen nach Anspruch 1 oder 2, **dadurch gekennzeichnet, dass** die Amplitude (A) der harmonischen Wellenform des Einschnittes (4) über die gesamte Tiefenerstreckung des Einschnittes (4) abnimmt, sodass die Amplitude an der Laufstreifenperipherie ihren Maximalwert und am Einschnittgrund (6) des Einschnittes (4) ihren Minimalwert aufweist.

4. Fahrzeugluftreifen nach Anspruch 3, **dadurch gekennzeichnet, dass** der Minimalwert der Amplitude 20% bis 40%, insbesondere 23% bis 33%, des Maximalwertes der Amplitude beträgt.

5. Fahrzeugluftreifen nach Anspruch 3 oder 4, **dadurch gekennzeichnet, dass** die Amplitude (A) der harmonischen Wellenform des Einschnittes (4) in einer Tiefe von 50% der Tiefe (t₁) des Einschnittes (4) um 20% bis 30%, insbesondere um 22% bis 26%, größer ist als der aus dem Minimalwert und dem Maximalwert errechnete arithmetische Mittelwert der Amplitude.

6. Fahrzeugluftreifen nach Anspruch 5, **dadurch gekennzeichnet, dass** die Amplitude (A) der harmonischen Wellenform des Einschnittes (4) in einer Tiefe von 75% der Tiefe (t₁) des Einschnittes (4) um 15% bis 25%, insbesondere um 18% bis 22%, größer ist als jener Mittelwert der Amplitude, welcher aus der Amplitude in einer Tiefe von 50% der Tiefe (t₁) des Einschnittes (4) und dem Minimalwert der Amplitude errechnet ist.

7. Fahrzeugluftreifen nach einem der Ansprüche 1 bis 6, **dadurch gekennzeichnet, dass** die Wellenlänge (λ) der harmonischen Wellenform des Einschnittes (4) über die radiale Erstreckung der Wellenform konstant ist.

8. Fahrzeugluftreifen nach einem der Ansprüche 1 bis 4, **dadurch gekennzeichnet, dass** die Wellenlänge (λ) der harmonischen Wellenform des Einschnittes (4) radial nach innen stetig zunimmt.

9. Fahrzeugluftreifen nach Anspruch 8, **dadurch gekennzeichnet, dass** die Wellenlänge (λ) der harmonischen Wellenform des Einschnittes (4) über die gesamte Tiefenerstreckung des Einschnittes (4) zunimmt.

10. Fahrzeugluftreifen nach Anspruch 8 oder 9, **dadurch gekennzeichnet, dass**, jeweils ermittelt an der tiefsten Stelle des Einschnittes (4), die Wellenlänge (λ) der harmonischen Wellenform des Einschnittes (4) das 30,0- bis 40,0-Fache, insbesondere das 33,0- bis 37,0-Fache, der Amplitude (A) der harmonischen Wellenform beträgt.

11. Fahrzeugluftreifen nach einem der Ansprüche 8 bis 10, **dadurch gekennzeichnet, dass** die Amplitude (A) in einer Tiefe von 40% der Tiefe (t₁) des Einschnittes (4) um 7% bis 17%, insbesondere um 9% bis 14%, größer als die Summe aus dem 0,6-Fachen des Maximalwertes der Amplitude (A) und dem 0,4-Fachen des Minimalwertes der Amplitude (A).

12. Fahrzeugluftreifen nach einem der Ansprüche 1 bis 11, **dadurch gekennzeichnet, dass**, jeweils ermittelt an der Laufstreifenperipherie, die Wellenlänge (λ) der harmonischen Wellenform des Einschnittes (4) das 4,0- bis 5,0-Fache, insbesondere das 4,2- bis 4,6-Fache, der Amplitude (A) der harmonischen Wellenform beträgt.

13. Fahrzeugluftreifen nach einem der Ansprüche 1 bis 12, **dadurch gekennzeichnet, dass** der harmonischen Wellenform des Einschnittes (4) eine Sinus-Welle, eine Cosinus-Welle, eine Reckteck-Welle, eine Dreieck-Welle, eine Sägezahn-Welle oder eine Trapez-Welle zugrunde liegt.

## Claims

1. Pneumatic vehicle tyre having a tread with profile elements (1), such as profile blocks (1), for example, which are provided with sipes (4) extending parallel to one another in plan view and at an angle of 0° to 50° in relation to the axial direction, wherein each sipe (4), at least over a portion (4a), follows a path in the form of a harmonic wave in plan view and each sipe (4) extends radially inwards with a progressive reduction of the amplitude (A) of the harmonic wave shape from the outer surface of the profile element (1),
**characterized in that**
the amplitude (A) of the harmonic wave shape of the sipe (4) decreases radially inwards from the outer surface of the profile element (1) in a progressive way.

2. Pneumatic vehicle tyre according to Claim 1, **characterized in that** the amplitude (A) of the harmonic waveform of the sipe (4) decreases to a depth of at least 65%, in particular at least 80%, of the depth (t₁) of the sipe (4) in a progressive way.

3. Pneumatic vehicle tyre according to Claim 1 or 2, **characterized in that** the amplitude (A) of the harmonic wave shape of the sipe (4) decreases over the entire extent of the depth of the sipe (4), with the result that the amplitude has its maximum value at the tread periphery and its minimum value at the sipe base (6) of the sipe (4).

4. Pneumatic vehicle tyre according to Claim 3, **characterized in that** the minimum value of the amplitude is 20% to 40%, in particular 23% to 33%, of the maximum value of the amplitude.

5. Pneumatic vehicle tyre according to Claim 3 or 4, **characterized in that** the amplitude (A) of the harmonic wave shape of the sipe (4) at a depth of 50% of the depth (t₁) of the sipe (4) is 20% to 30%, in particular 22% to 26%, greater than the arithmetic mean value, calculated from the minimum value and the maximum value, of the amplitude.

6. Pneumatic vehicle tyre according to Claim 5, **characterized in that** the amplitude (A) of the harmonic wave shape of the sipe (4) at a depth of 75% of the depth (t₁) of the sipe (4) is 15% to 25%, in particular 18% to 22%, greater than that mean value of the amplitude that is calculated from the amplitude at a depth of 50% of the depth (t₁) of the sipe (4) and the minimum value of the amplitude.

7. Pneumatic vehicle tyre according to one of Claims 1 to 6, **characterized in that** the wavelength (λ) of the harmonic wave shape of the sipe (4) is constant over the radial extent of the wave shape.

8. Pneumatic vehicle tyre according to one of Claims 1 to 4, **characterized in that** the wavelength (λ) of the harmonic wave shape of the sipe (4) increases continuously radially inwards.

9. Pneumatic vehicle tyre according to Claim 8, **characterized in that** the wavelength (λ) of the harmonic wave shape of the sipe (4) increases over the entire extent of the depth of the sipe (4).

10. Pneumatic vehicle tyre according to Claim 8 or 9, **characterized in that** the wavelength (λ) of the harmonic wave shape of the sipe (4), determined in each case at the deepest point of the sipe (4), is 30.0 to 40.0 times, in particular 33.0 to 37.0 times, the amplitude (A) of the harmonic wave shape.

11. Pneumatic vehicle tyre according to one of Claims 8 to 10, **characterized in that** the amplitude (A) at a depth of 40% of the depth (t₁) of the sipe (4) is 7% to 17%, in particular 9% to 14%, greater than the sum of 0.6 times the maximum value of the amplitude (A) and 0.4 times the minimum value of the amplitude (A).

12. Pneumatic vehicle tyre according to one of Claims 1 to 11, **characterized in that** the wavelength (λ) of the harmonic wave shape of the sipe (4), determined in each case at the tread periphery, is 4.0 to 5.0 times, in particular 4.2 to 4.6 times, the amplitude (A) of the harmonic wave shape.

13. Pneumatic vehicle tyre according to one of Claims 1 to 12, **characterized in that** the harmonic wave shape of the sipe (4) is based on a sine wave, a cosine wave, a square wave, a triangle wave, a sawtooth wave or a trapezoidal wave.

## Revendications

1. Pneumatique de véhicule comprenant une bande de roulement pourvue d'éléments profilés (1), comme par exemple des blocs profilés (1), qui sont pourvus d'incisions (4) qui s'étendent parallèlement les unes aux autres et avec un angle de 0° à 50° par rapport à la direction axiale en vue de dessus, chaque incision (4) s'étendant en forme d'onde harmonique en vue de dessus sur au moins une portion (4a) et chaque incision (4) s'étendant radialement vers l'intérieur depuis la surface extérieure de l'élément profilé (1) avec réduction progressive de l'amplitude (A) de la forme d'onde harmonique,
**caractérisé en ce que**
l'amplitude (A) de la forme d'onde harmonique de l'incision (4) diminue de manière progressive radialement vers l'intérieur depuis la surface extérieure de l'élément profilé (1).

2. Pneumatique de véhicule selon la revendication 1, **caractérisé en ce que** l'amplitude (A) de la forme d'onde harmonique de l'incision (4) diminue de manière progressive jusqu'à une profondeur d'au moins 65 %, notamment d'au moins 80 %, de la profondeur (t₁) de l'incision (4).

3. Pneumatique de véhicule selon la revendication 1 ou 2, **caractérisé en ce que** l'amplitude (A) de la forme d'onde harmonique de l'incision (4) diminue sur toute l'étendue en profondeur de l'incision (4) de sorte que l'amplitude a sa valeur maximale à la périphérie de la bande de roulement et sa valeur minimale à la base (6) de l'incision (4).

4. Pneumatique de véhicule selon la revendication 3, **caractérisé en ce que** la valeur minimale de l'amplitude est de 20 % à 40 %, notamment de 23 % à 33 %, de la valeur maximale de l'amplitude.

5. Pneumatique de véhicule selon la revendication 3 ou 4, **caractérisé en ce que** l'amplitude (A) de la forme d'onde harmonique de l'incision (4) à une profondeur de 50 % de la profondeur (t₁) de l'incision (4) est supérieure de 20 % à 30 %, notamment de 22 % à 26 %, à la valeur moyenne arithmétique de l'amplitude calculée à partir de la valeur minimale et de la valeur maximale.

6. Pneumatique de véhicule selon la revendication 5, **caractérisé en ce que** l'amplitude (A) de la forme d'onde harmonique de l'incision (4) à une profondeur de 75 % de la profondeur (t₁) de l'incision (4) est supérieure de 15 % à 25 %, notamment de 18 % à 22 %, à ladite valeur moyenne de l'amplitude qui est calculée à partir de l'amplitude à une profondeur de 50 % de la profondeur (t₁) de l'incision (4) et de la valeur minimale de l'amplitude.

7. Pneumatique de véhicule selon l'une des revendications 1 à 6, **caractérisé en ce que** la longueur d'onde (λ) de la forme d'onde harmonique de l'incision (4) est constante sur l'étendue radiale de la forme d'onde.

8. Pneumatique de véhicule selon l'une des revendications 1 à 4, **caractérisé en ce que** la longueur d'onde (λ) de la forme d'onde harmonique de l'incision (4) augmente de manière continue radialement vers l'intérieur.

9. Pneumatique de véhicule selon la revendication 8, **caractérisé en ce que** la longueur d'onde (λ) de la forme d'onde harmonique de l'incision (4) augmente sur toute la profondeur de l'incision (4).

10. Pneumatique de véhicule selon la revendication 8 ou 9, **caractérisé en ce que** la longueur d'onde (λ) de la forme d'onde harmonique de l'incision (4) est de 30,0 à 40,0 fois, notamment de 33,0 à 37,0 fois, l'amplitude (A) de la forme d'onde harmonique, déterminée à chaque fois au point le plus profond de l'incision (4).

11. Pneumatique de véhicule selon l'une des revendications 8 à 10, **caractérisé en ce que** l'amplitude (A) à une profondeur de 40 % de la profondeur (t₁) de l'incision (4) est supérieure de 7 % à 17 %, notamment de 9 % à 14 % , à la somme de 0,6 fois la valeur maximale de l'amplitude (A) et 0,4 fois la valeur minimale de l'amplitude (A).

12. Pneumatique de véhicule selon l'une des revendications 1 à 11, **caractérisé en ce que** la longueur d'onde (λ) de la forme d'onde harmonique de l'incision (4) est de 4,0 à 5,0 fois, en particulier 4,2 à 4,6 fois, l'amplitude (A) de la forme d'onde harmonique, déterminée à chaque fois à la périphérie de la bande de roulement.

13. Pneumatique de véhicule selon l'une des revendications 1 à 12, **caractérisé en ce que** la forme d'onde harmonique de l'incision (4) est fondée sur une onde sinusoïdale, une onde cosinusoïdale, une onde rectangulaire, une onde triangulaire, une onde en dents de scie ou une onde trapézoïdale.
